# EUROPÄISCHE PATENTSCHRIFT

(11) **EP 1 095 231 B1**
(45) Veröffentlichungstag und Bekanntmachung des Hinweises auf die Patenterteilung: **18.09.2002**
(21) Anmeldenummer: 99929242.8
(22) Anmeldetag: 16.06.1999
(51) Int. Cl.: F24J 2/46, F24J 2/20, F24J 2/51

(54) **VERFAHREN ZUM HERSTELLEN EINES SOLARKOLLEKTORS**
METHOD FOR PRODUCING A SOLAR COLLECTOR
PROCEDE PERMETTANT DE FABRIQUER UN CAPTEUR SOLAIRE

(30) Priorität: 07.07.1998 DE 19830345
(43) Veröffentlichungstag der Anmeldung: 02.05.2001
(73) Patentinhaber: UFE Solar GmbH, 16225 Eberswalde (DE)
(72) Erfinder: WEISER, Reinhold, D-16278 Steinhöfel (DE)
(74) Vertreter: Kruspig, Volkmar, Dipl.-Ing.
(86) Internationale Anmeldenummer: EP9904170
(87) Internationale Veröffentlichungsnummer: WO00003185

(56) Entgegenhaltungen:
- DE-A- 19 652 568
- US-A- 5 596 981

## Beschreibung

Die Erfindung betrifft ein Verfahren zum Herstellen eines Solarkollektors sowie ein Verfahren zum Herstellen eines Absorbers für einen Solarkollektor. Weiterhin betrifft die Erfindung einen entsprechend hergestellten Solarkollektor.

Üblicherweise bestehen Solarkollektoren aus einem etwa quaderförmigen flachen Gehäuse. Die der Sonnenstrahlung zugewandte Seite des Gehäuses besteht aus einer lichtdurchlässigen, insbesondere Glasplatte. In dem Gehäuse befindet sich ein Absorber. Der Absorber kann beispielsweise aus einem flachen geschwärzten Hohlkörper mit einem Einlaß- und einem Auslaßstutzen bestehen. Zwischen dem Absorber und der der Sonnenstrahlung abgewandten Seite des Gehäuses befindet sich eine Wärmedämmplatte. Die auf die Glasplatte auftreffende Strahlung wird größtenteils von der Glasplatte durchgelassen und an der Oberfläche des Absorbers absorbiert. Reemittierte Strahlung wird von der Glasplatte größtenteils in das Gehäuseinnere zurückreflektiert. Wie in einem Treibhaus ist innerhalb des Gehäuses die Temperatur wesentlich höher als außerhalb des Gehäuses. Eine durch den Absorber gepumpte Flüssigkeit erwärmt sich auf diese Weise und kann für Heizzwecke, zur Warmwassererzeugung oder dergleichen verwendet werden.

Bekannte Herstellungsverfahren für Solarkollektoren und deren Bestandteile sind verhältnismäßig aufwendig. Üblicherweise wird für einen Solarkollektor ein Profilrahmen bereitgestellt, in den eine Rückwand, die Wärmedämmplatte, der Absorber und die Glasplatte nacheinander eingefügt werden. Die Montage eines Solarkollektors ist somit relativ zeitaufwendig.

Ein Verfahren zur Herstellung des Absorbers ist aus der DE 295 21 415 U1 bekannt. Danach werden zwei Einzelbleche derart miteinander verbunden, daß sie zunächst an den Umfangsseiten und im Bereich von Zwischenverbindungen miteinander verschweißt werden. Durch Ausstanzen und Ausformen werden anschließend Anschlußbereiche für einen Zu- und Ablauf geschaffen. Danach wird der Plattenabsorber einer Innendruckbeaufschlagung solange unterworfen, bis eine Ausformung eines vorbestimmten Fluidströmungsweges entsprechend des gewünschten Fluidströmungsquerschnitts erreicht wird. Die gewünschten geometrischen Abmessungen werden jedoch nur dann erreicht, wenn die Einzelbleche hinsichtlich ihrer Dicke homogen ausgebildet sind und das Verschweißen äußerst präzise erfolgt. Ein derart exaktes Verschweißen ist in der Praxis mit einem hohen Aufwand verbunden.

DE 196 52 568 beschreibt ein Verfahren zum Herstellen eines Solarkollektors, welches folgende Schritte umfaßt: Ausklinken eines Profils derart, daß das Profil zu einem geschlossenen Profilrahmen biegbar ist, Biegen des Profils an zwei inneren Biegeachsen zu einem an der Umfangsseite offenen Profilrahmen, Biegen des Profils an zwei äußeren Biegeachsen, so daß der Profilrahmen das Modul an vier Umfangsseiten umschließt, Verbinden der Stirnseiten des Profils miteinander.

Aus US 5 596 981 sind die folgenden Schritte bekannt: schichtweises Anordnen einer Rückwand, einer Wärmedämmplatte, eines Absorbers und einer Glasplatte zu einem Modul, Einschieben des Moduls in den U-förmigen U-Profilrahmen, so daß der U-Profilrahmen das Modul über drei Umfangsseiten umschließt.

DE 196 52 568 und US 5 596 981 offenbaren keine Solarkollektorrahmen, die aus einem einzigen Profil hergestellt werden.

Es ist daher Aufgabe der Erfindung, ein Verfahren zur Herstellung eines Solarkollektors bereitzustellen, das verhältnismäßig schnell, einfach und kostengünstig durchzuführen ist.

Diese Aufgabe wird hinsichtlich der Herstellung des Solarkollektors durch die Lehre der Patentansprüche 1 bis 2 gelöst.

Gemäß einer ersten Ausführungsform der Erfindung ist zum Herstellen des Solarkollektors ein Verfahren mit folgenden Schritten vorgesehen:
- Ausklinken eines U-Profils an vorbestimmten Stellen derart, daß das U-Profil zu einem geschlossenen U-Prpfilrahmen biegbar ist.;
- schichtweises Anordnen einer Rückwand, einer Wärmedämmplatte, eines Absorbers und einer Glasplatte zu einem Modul;
- Biegen des U-Profils zu dem U-Profilrahmen, wobei eine Umfangseite des U-Profilrahmens offen bleibt;
- Einschieben des Moduls durch die offenen Umfangsseite in den U-Profilrahmen;
- Fertigbiegen des U-Profils zu dem geschlossenen U-Profilrahmen; und
- Verbinden der Stirnseiten des zu dem Profilrahmen gebogenen U-Profils miteinander.

Durch das Biegen des U-Profils zu dem geschlossenen U-Profilrahmen weist dieser lediglich eine offene Stelle auf, die durch Verbinden der Enden geschlossen werden muß. Dadurch läßt sich der Solarkollektor mit wenig Zeitaufwand herstellen.

Gemäß einer zweiten Ausführungsform der Erfindung ist zum Herstellen des Solarkollektors ein Verfahren mit folgenden Schritten vorgesehen:
- Ausklinken eines L-Profils an vorbestimmten Stellen derart, daß das L-Profil zu einem geschlossenen Profilrahmen biegbar ist;
- Biegen des L-Profils zu einem entlang den Umfangseiten geschlossenen L-Profilrahmen;
- Verbinden der Stirnseiten des L-Profils miteinander;
- schichtweises Anordnen einer Rückwand, einer Wärmedämmplatte, eines Absorbers und einer Glasplatte zu einem Modul;
- Einschieben des Moduls in den L-Profilrahmen, wobei die Einschieberichtung senkrecht zur Rahmenebene liegt; und
- Biegen des L-Profilrahmens zu einem U-Profilrahmen, so daß das Modul formschlüssig in dem U-Profilrahmen eingefaßt ist.

Diese Vorgehensweise hat den Vorteil, daß mit dem Modul eine elastische, z.B. Gummidichtung oder dergleichen mit eingeschoben werden kann.

Gemäß einer dritten Ausführungsform der Erfindung ist zum Herstellen des Solarkollektors ein Verfahren mit folgenden Schritten vorgesehen:
- Ausklinken eines U-Profils an vorbestimmten Stellen derart, daß das U-Profil zu einem geschlossenen U-Profilrahmen biegbar ist;
- schichtweises Anordnen einer Wärmedämmplatte und eines Absorbers zu einem Modul;
- Biegen des U-Profils zu dem U-Profilrahmen, wobei eine Umfangsseite des U- Profilrahmens offen bleibt;
- Einschieben des Moduls durch die offene Umfangsseite in den U-Profilrahmen;
- Biegen des U-Profils zu dem geschlossenen U-Profilrahmen;
- Verbinden der Stirnseiten des zu dem U-Profilrahmen gebogenen U-Profils miteinander; und
- Ankleben einer Glasplatte und Befestigen einer Rückwand an oder auf den U-Profilrahmen, so daß ein geschlossenes quaderförmiges Gehäuse ausgebildet wird, wobei die Glasplatte dem Absorber und die Rückwand der Wärmedämmplatte zugeordnet wird.

Bei dieser Ausführungsform des erfindungsgemäßen Verfahrens werden die Glasplatte und die Rückwand von außen an den Profilrahmen angebracht. Auch auf diese Weise läßt sich schnell und kostengünstig ein Solarkollektor montieren.

Weiterhin ist vorgesehen, daß das Verbinden der stirnseitigen Enden stoffschlüssig, insbesondere durch Schweißen erfolgt.

Alternativ dazu kann gemäß der Erfindung vorgesehen sein, daß das Verbinden der stirnseitigen Enden durch Befestigen einer Verbindungsplatte im Bereich um die beiden Enden erfolgt. Dabei kann das Befestigen der Verbindungsplatte durch Annieten oder durch Verschrauben erfolgen. Somit läßt sich auf einfache und schnelle Weise der U-Profilrahmen lösbar verschließen. Die Schraubverbindung hat den weiteren Vorteil, daß die Verbindung für Reparaturzwecke lösbar ist. Damit läßt sich auf einfache Weise das Gehäuse des Solarkollektors bei Bedarf öffnen.

Bei einer Weiterbildung der Erfindung umfaßt das Herstellungsverfahren des Solarkollektors die beiden zusätzlichen Schritte:
- Ausbilden von wenigstens zwei Öffnungen im U-Profil, die an gegenüberliegenden Seiten des Profilrahmens vorgesehen sind; und
- Beabstanden der Wärmedämmplatte von der Rückwand, so daß ein Luftkanal zwischen den wenigstens zwei Öffnungen ausgebildet wird.

Mit dem Luftkanal wird eine Kühlung erreicht und damit eine Überhitzung des Kollektors bzw. der Absorberflüssigkeit vermieden.

Der Luftkanal kann dadurch ausgebildet werden, daß das Beabstanden der Wärmedämmplatte von der Rückwand durch Anordnen von Abstandselementen realisiert wird. In diesem Fall ist es bevorzugt, daß die Wärmedämmplatte eine ausreichende Festigkeit aufweist.

Alternativ dazu kann vorgesehen sein, daß das Beabstanden der Wärmedämmplatte von der Rückwand durch Anlegen einer Zwischenplatte an die dem Absorber abgewandte Seite der Wärmedämmplatte erfolgt. Dies ist insbesondere dann von Vorteil, wenn die Wärmedämmplatte aus einem weichen Material, beispielsweise Glaswolle besteht.

Alternativ kann weiterhin vorgesehen sein, daß das Beabstanden der Wärmedämmplatte von der Rückwand durch Anordnen einer vorgefertigten Formplatte durchgeführt wird, wobei die Formplatte wenigstens einen parallel zu deren Plattenebene verlaufenden Luftkanal aufweist, der sich zwischen den Öffnungen erstreckt. Eine derartige Formplatte mit einem integrierten Luftkanal ermöglicht eine besonders schnelle Montage des Solarkollektors.

Vorteilhafterweise kann das Herstellungsverfahren einen weiteren Schritt umfassen, bei dem wenigstens eine Öffnung mit einem Ventil bestückt wird. Durch das temperaturabhängige Betätigen des Ventils läßt sich die Kühlwirkung steuern.

Hierfür ist ein Thermostat zur Steuerung des Ventils vorgesehen, um eine temperaturabhängige Betätigung des Ventils zu erreichen.

Vorzugsweise besteht das U-Profil aus Aluminium. Aluminium ist ein verhältnismäßig leichtes und korrosionsbeständiges Metall. Da Solarkollektoren überwiegend auf Dächern montiert werden und der Witterung ausgesetzt sind, ist dies besonders vorteilhaft.

Weiterhin kann vorgesehen sein, daß die Außenabmessungen des Moduls geringfügig kleiner als die Innenabmessungen des U-Profilrahmens sind. Der U-Profilrahmen kann somit das Modul beziehungsweise dessen Bestandteile formschlüssig aufnehmen. Weitere Befestigungsmaßnahmen sind nicht erforderlich, was zu einer schnellen Montage beiträgt.

Im Hinblick auf die Energiebilanz kann weiterhin vorgesehen sein, daß der Absorber mit einem vorbestimmten Neigungswinkel gegenüber dem Profilrahmen angeordnet wird. Der Anstellwinkel eines Daches und der gewünschte Neigungswinkel des Absorbers im Hinblick auf den Sonneneinstrahlwinkel weichen in den meisten Fällen voneinander ab. Diese Abweichung kann durch den vorbestimmten Neigungswinkel des Absorbers korrigiert werden. Das Gehäuse des Solarkollektors wird dabei üblicherweise parallel zur Dachebene angeordnet. Der Absorber ist lediglich innerhalb des Gehäuses des Solarkollektors geneigt. Dadurch kann unter Beibehaltung der Ästhetik die Energiebilanz verbessert werden.

Bei demjenigen Verfahren, bei dem die Glasplatte und/oder die Rückwand außerhalb des Profilrahmens befestigt werden, kann das Verkleben der Glasplatte und/oder der Rückwand mit einem Klebeband erfolgen.

Zum Schutz der Glasplatte kann anstelle des U-Profils ein F-Profil verwendet werden, wobei der zusätzliche Profilabschnitt eine Umrandung für die Glasplatte bildet. Dadurch läßt sich die Glasplatte versenkt und seitlich geschützt am Rahmen fixieren.

In der nachfolgenden Beschreibung wird die Erfindung anhand von Ausführungsbeispielen und beigefügten Zeichnungen näher erläutert. Es zeigen:
- Fig. 1: eine Dreiseitenansicht eines U-Profils;
- Fig. 2: eine Explosionsansicht eines Moduls gemäß einer ersten Ausführungsform der Erfindung;
- Fig. 3: eine Draufsicht eines Solarkollektors gemäß der ersten Ausführungsform der Erfindung;
- Fig. 4: eine Dreiseitenansicht eines L-Profils gemäß einer zweiten Ausführungsform der Erfindung;
- Fig. 5: eine Draufsicht eines Solarkollektors gemäß der zweiten Ausführungsform der Erfindung;
- Fig. 6: eine Explosionsansicht eines Moduls gemäß einer dritten Ausführungsform der Erfindung;
- Fig. 7: eine Perspektivansicht eines Solarkollektors gemäß der dritten Ausführungsform der Erfindung;
- Fig. 8: eine Schnittansicht eines Solarkollektors gemäß einer vierten Ausführungsform;
- Fig. 9: eine Explosionsansicht zweier Absorber-Flächenstücke mit einem Einlaß- und einem Auslaß-Verbindungsstück;
- Fig. 10: die zu einem Absorber gemäß einer ersten Ausführungsform verschweißten Absorber-Flächenstücke;
- Fig. 11: die zu dem Absorber gemäß einer zweiten Ausführungsform verschweißten Absorber-Flächenstücke-;
- Fig. 12: den fertigen Absorber gemäß der ersten Ausführungsform;
- Fig. 13: eine fünfte Ausführungsform des Solarkollektors; und
- Fig. 14: eine sechste Ausführungsform des Solarkollektors.

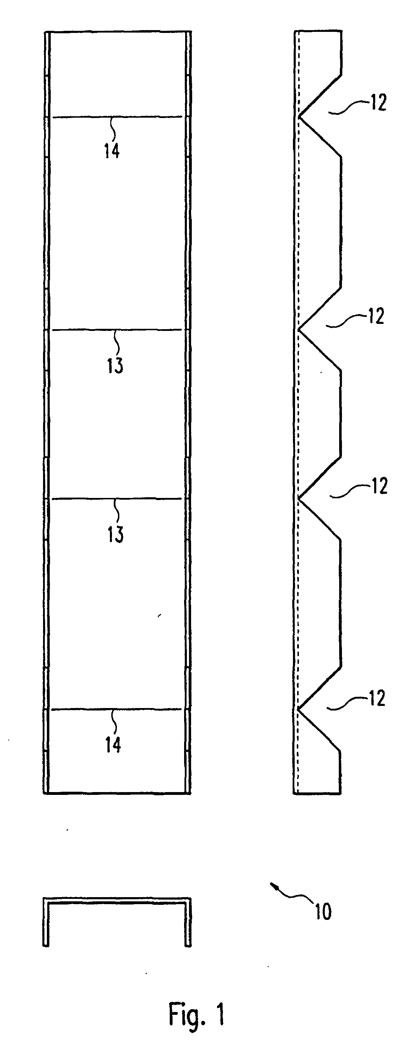

Fig. 1 zeigt eine Dreiseitenansicht eines U-Profils 10 mit insgesamt acht Ausklinkungen 12. Das U-Profil 10 ist derart ausgeklinkt, daß es zu einem rechteckförmigen U-Profilrahmen biegbar ist. Die Ausklinkungen 12 sind paarweise angeordnet, so daß das U-Profil 10 symmetrisch bezüglich seiner Längsmittenachse ist. Zwischen jeweils zwei paarweise angeordneten Ausklinkungen 12 erstreckt sich eine Biegeachse 13, 14. Die zwei inneren 13 und zwei äußeren 14 Biegeachsen sind jeweils den vier Ecken des vorgesehenen U-Profilrahmens zugeordnet. Die Biegeachsen 13 und 14 erstrecken sich senkrecht zur Längsmittenachse des U-Profils 10. Die Abstände zwischen zwei benachbarten Biegeachsen 13, 14 entsprechen Seitenlängen des vorgesehenen U-Profilrahmens. Das U-Profil 10 besteht vorzugsweise aus Aluminium oder dergleichen.

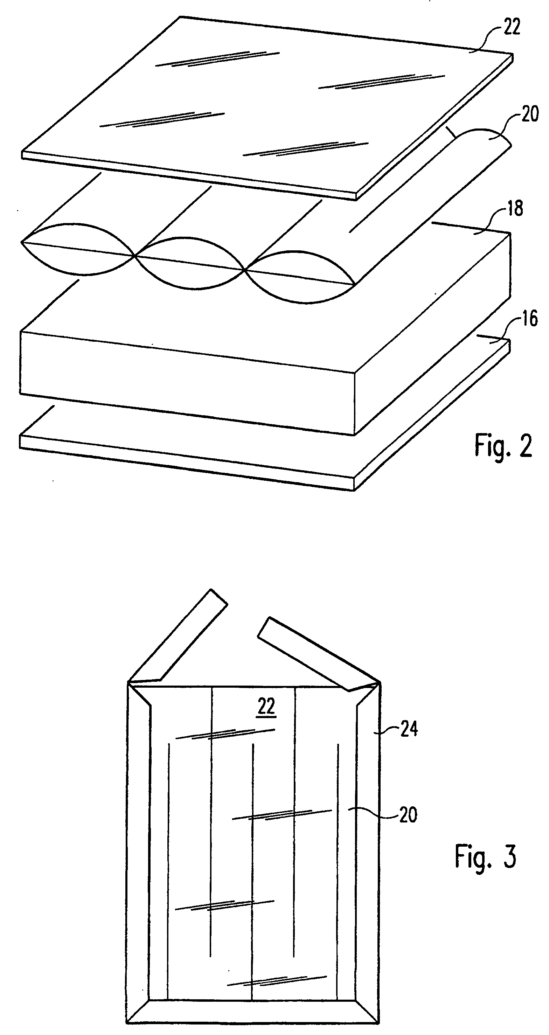

In Fig. 2 ist eine Explosionsansicht eines Moduls für einen Solarkollektor dargestellt. Das Modul ist zur Aufnahme in den U-Profilrahmen vorgesehen. Das Modul besteht aus einer schichtweisen Anordnung einer Rückwand 16, einer Wärmedämmplatte 18, eines Absorbers 20 und einer Glasplatte 22. Die Außenabmessungen des Moduls sind geringfügig kleiner als die Innenabmessungen des vorgesehenen U-Profilrahmens. Bei der Montage des Solarkollektors ist vorgesehen, daß das Modul als Ganzes in den U-Profilrahmen eingefügt wird.

In Fig. 3 ist eine Draufsicht eines Solarkollektors während der Montage dargestellt. Das Modul ist bereits im U-Profilrahmen 24 integriert. Der U-Profilrahmen 24 ist aus einem U-Profil 10 gebogen.

Die Reihenfolge der Montageschritte für den Solarkollektor wird nachfolgend beschrieben. Das U-Profil 10 wird zunächst um die beiden inneren Biegeachsen 13 um jeweils etwa 90° gebogen, so daß ein U-Profilrahmen 24 mit einer noch offenen Umfangsseite entsteht. Durch diese offene Umfangsseite wird das Modul in den U-Profilrahmen 24 eingeschoben. Das Modul wird dabei als Ganzes in den U-Profilrahmen 24 eingefügt, nachdem es durch schichtweises Anordnen der Rückwand 16, der Wärmedämmplatte 18, des Absorbers 20 und der Glasplatte 22 zusammengesetzt wurde. Danach erfolgt ein Biegen entlang der äußeren Biegeachsen 14, so daß ein geschlossener U-Profilrahmen 24 entsteht. Im Anschluß werden die Stirnseiten des zu dem U-Profilrahmens 24 gebogenen U-Profils 10 miteinander verbunden. Dies kann durch Schweißen oder Anbringen einer Verbindungsplatte erfolgen. Die Verbindungsplatte kann angenietet oder angeschraubt werden. Der U-Profilrahmen 24 weist somit nur eine einzige Verbindungsnaht auf. Abschließend werden die Glasplatte 22 und die Rückwand 16 gegenüber dem U-Profilrahmen 24 abgedichtet. Dies kann beispielsweise durch Einbringen einer zähflüssigen Dichtmasse erfolgen. Ebenso wäre es denkbar, eine Glasplatte 22 und/oder eine Rückwand 16 zu verwenden, die einen Dichtrahmen aus einem elastischen Material aufweisen.

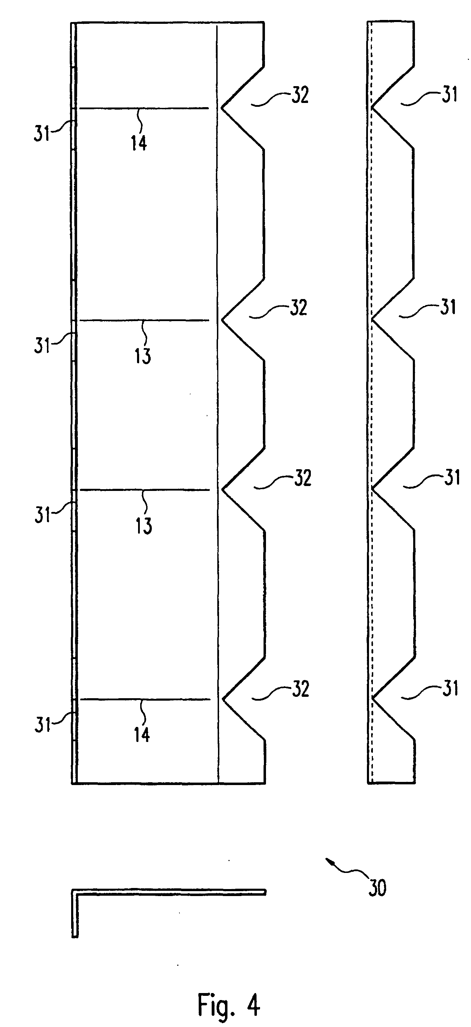

In Fig. 4 ist eine Dreiseitenansicht eines L-Profils 30 für eine zweite Ausführungsform zur Herstellung des Solarkollektors dargestellt. Das L-Profil 30 weist ebenfalls 8 Ausklinkungen 31, 32 auf. An einem kürzeren Schenkel des L-Profils 30 befinden sich vier Ausklinkungen 31, die sich über die gesamte Länge des kürzeren Schenkels erstrecken. Am Ende des längeren Schenkels des L-Profils 30 befinden sich ebenfalls vier Ausklinkungen 32, die die gleichen Abmessungen wie die Ausklinkungen 31 am kürzeren Schenkel des L-Profils 30 aufweisen. Das L-Profil 30 entspricht somit dem in Fig. 1 dargestellten U-Profil 10, wobei ein Schenkel des U-Profils 10 um 90° nach außen umgeklappt ist. Das L-Profil 30 weist ebenfalls zwei innere 13 und zwei äußere 14 Biegeachsen auf. Die Biegeachsen 13, 14 erstrecken sich jeweils zwischen zwei gegenüberliegenden Ausklinkungen 31, 32 am kürzeren und am längeren Schenkel des L-Profils. Die Biegeachsen 13 und 14 erstrecken sich senkrecht zur Längsmittenachse des L-Profils 30.

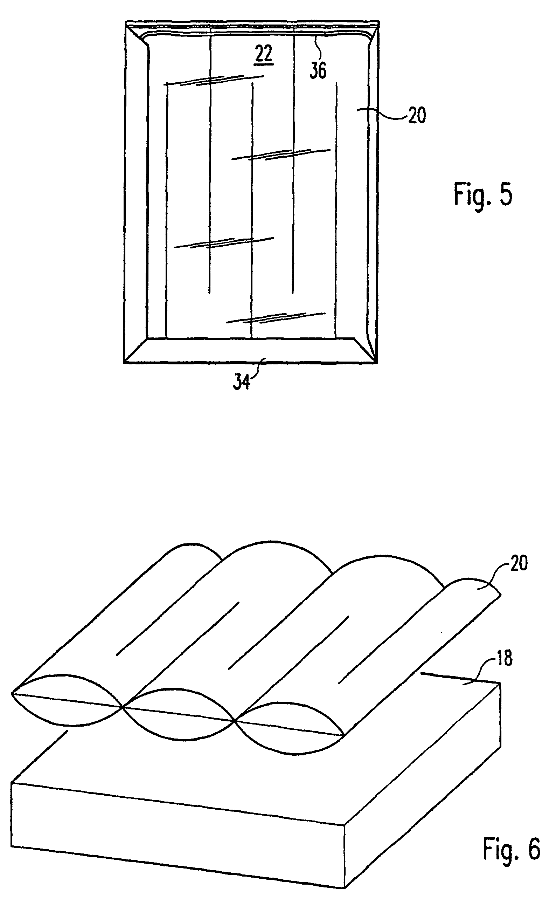

Fig. 5 zeigt eine Draufsicht der zweiten Ausführungsform des Solarkollektors während der Montage. Das Modul ist in einen L-Profilrahmen 34 eingefügt. An zwei Seiten sind der Fortsatz des längeren Schenkels des L-Profils 30 derart umgebogen, daß an diesen beiden Seiten ein U-Profil vorliegt. Wie bei der ersten Ausführungsform besteht das Modul aus einer Rückwand 16, einer Wärmedämmplatte 18, einem Absorber 20 und einer Glasplatte 22. Weiterhin weist die Glasplatte 22 am Randbereich ihrer Außenseite eine Dichtung 36 aus Gummi oder dergleichen auf.

Die Montage der zweiten Ausführungsform des Solarkollektors erfolgt mit den nachstehend genannten Schritten. Das L-Profil 30 wird an allen vier Biegeachsen 13, 14 um etwa 90° gebogen. Die stirnseitigen Enden des L-Profils 30 werden miteinander verbunden. Auf diese Weise entsteht der L-Profilrahmen 34. Das Modul wird nun senkrecht zur Rahmenebene in den L-Profilrahmen 34 eingefügt. Danach wird an allen vier Seiten der Fortsatz des längeren Schenkels des L-Profils 30 zum Rahmeninneren hin gebogen. Somit entsteht ein U-Profilrahmen wie bei der ersten Ausführungsform.

Die erste und zweite Ausführungsform unterscheiden sich in der Reihenfolge der Schritte und in der Bewegungsrichtung des Moduls beim Einfügen in den Rahmen. Bei der ersten Ausführungsform erstreckt sich die Bewegungsrichtung des Moduls parallel zur Rahmenebene, während sie sich bei der zweiten Ausführungsform senkrecht zur Rahmenebene erstreckt. Die fertigen Solarkollektoren gemäß der ersten und zweiten Ausführungsform unterscheiden sich lediglich durch die Abdichtung von Glasplatte und/oder Rückwand. Das Herstellungsverfahren gemäß der zweiten Ausführungsform ermöglicht das Anbringen einer Dichtung 36 im Randbereich der Glasplatte 22.

Fig. 6 zeigt ein Modul für eine dritte Ausführungsform des Solarkollektors. Das Modul besteht aus der Wärmedämmplatte 18 und dem Absorber 20.

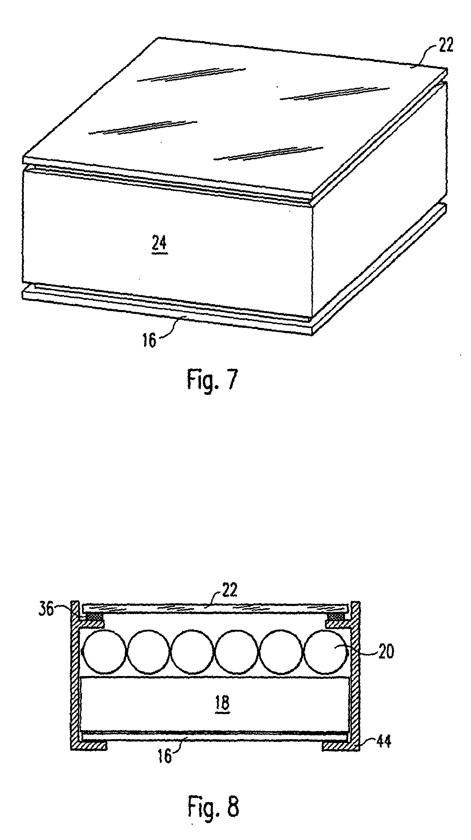

In Fig. 7 ist eine Perspektivansicht des Solarkollektors gemäß der dritten Ausführungsform dargestellt. Der U-Profilrahmen 24 ist wie bei der ersten Ausführungsform hergestellt und ausgebildet. In dem U-Profilrahmen 24 befindet sich das Modul, das aus der Wärmedämmplatte 18 und dem Absorber 20 besteht. Die Rückwand 16 und die Glasplatte 22 werden außenseitig an den U-Profilrahmen 24 derart angeklebt, daß der U-Profilrahmen 24, die Rückwand 16 und die Glasplatte 22 ein geschlossenes quaderförmiges Gehäuse bilden. Das Verkleben der Glasplatte 22 und der Rückwand 16 mit dem U-Profilrahmen 34 erfolgt vorzugsweise mit Klebestreifen. Um eine Beschädigung der Glasplatte 22 zu vermeiden, wäre die Verwendung einer Glasplatte mit Rahmen oder mit kleinerem Umfang als beim Profilrahmen 24 denkbar.

In Fig. 8 ist eine vierte Ausführungsform des Solarkollektors in Schnittansicht dargestellt. Die vierte Ausführungsform unterscheidet sich von der dritten Ausführungsform lediglich dadurch, daß anstelle des U-Profils 10 ein F-Profil 40 verwendet wird. Dadurch entsteht ein F-Profilrahmen 44, der gegenüber dem U-Profilrahmen 24 einen zusätzlichen Profilabschnitt aufweist. Durch den Profilabschnitt weist der Rahmen einen Rand auf. In dem von dem Rand umschlossenen Bereich wird die Glasplatte 22 versenkt und schließt zur Umgebung eben ab. Diese vierte Ausführungsform hat gegenüber der dritten Ausführungsform den Vorteil, daß die Glasplatte 22 besser geschützt ist. Das Herstellungsverfahren und der Solarkollektor gemäß der vierten Ausführungsform entsprechen in allen übrigen Aspekten der ersten Ausführungsform.

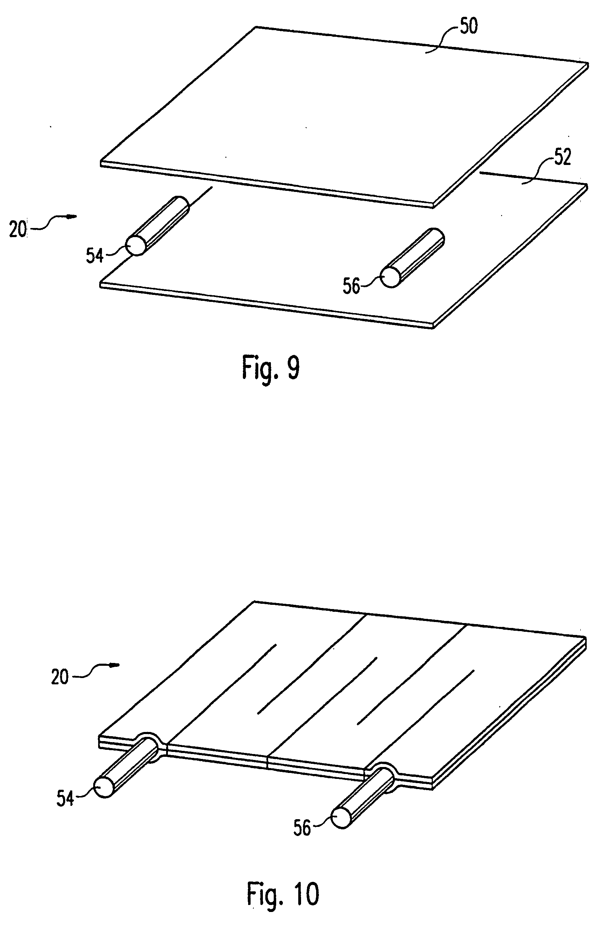

Fig. 9 zeigt eine Explosionsansicht der Einzelteile des Absorbers 20. Der Absorber 20 besteht demnach aus einem ersten Absorberblech 50, einem zweiten Absorberblech 52, einem Einlaßstutzen 54 und einem Auslaßstutzen 56.

Fig. 10 zeigt die miteinander verbundenen, insbesondere verschweißten Einzelteile des Absorbers 20. Die Absorberbleche 50 und 52 sind so miteinander verschweißt, daß vom Einlaßstutzen 54 zum Auslaßstutzen 56 ein mäanderförmiger Fluidkanal ausgebildet ist.

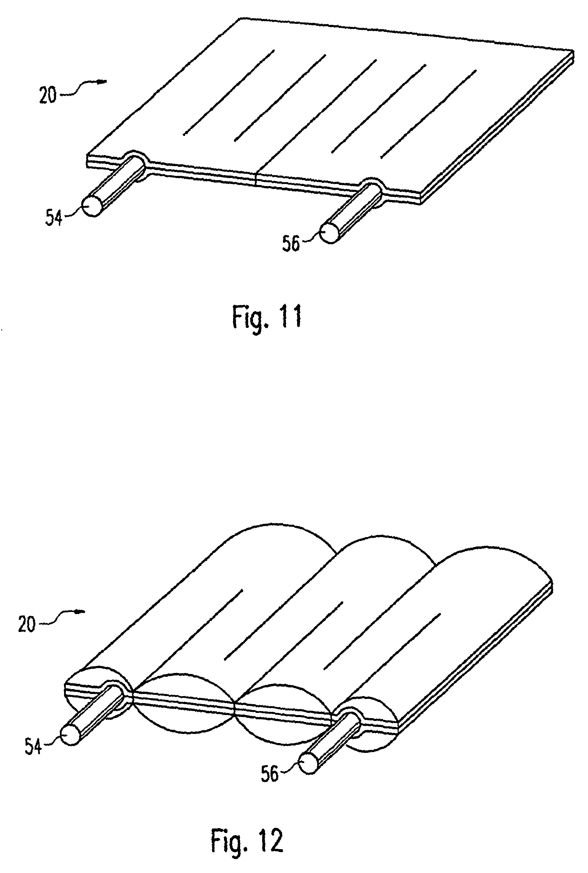

In Fig. 11 ist eine hierzu alternative Ausführungsform abgebildet. Der Fluidkanal erstreckt sich vom Einlaßstutzen 54 zum Auslaßstutzen 56 im wesentlichen U-förmig. Im Bereich der beiden Schenkel des U-förmigen Fluidkanals ist jeweils eine Mehrzahl zueinander paralleler Kanäle ausgebildet. Bei dieser Ausführungsform weist der Fluidkanal einen geringeren Strömungswiderstand auf.

In Fig. 12 ist der fertige Absorber gemäß der ersten Ausführungsform dargestellt. Der aufgeblasene, d.h. End-Zustand des Absorbers 20 wird dadurch erreicht, daß der Fluidkanal mit Innendruck beaufschlagt wird. Gemäß der Erfindung wird ein nicht dargestelltes Formteil verwendet, dessen Innenraum die Form des fertigen Absorbers 20 hat. Die Innenwände des Formteils dienen dabei als Anschlag beim Beaufschlagen des Fluidkanals mit Innendruck. Bereiche des Formteils werden dabei als Schweißelektroden zum Verbinden der beiden Absorberbleche 50, 52, des Einlaßstutzens 54 und des Auslaßstutzens 56 genutzt.

Der vorgestellte Solarkollektor zeichnet sich durch eine einzige Verbindungsnaht in dem Profilrahmen aus, der die übrigen Einzelteile in Umfangsrichtung umschließt.

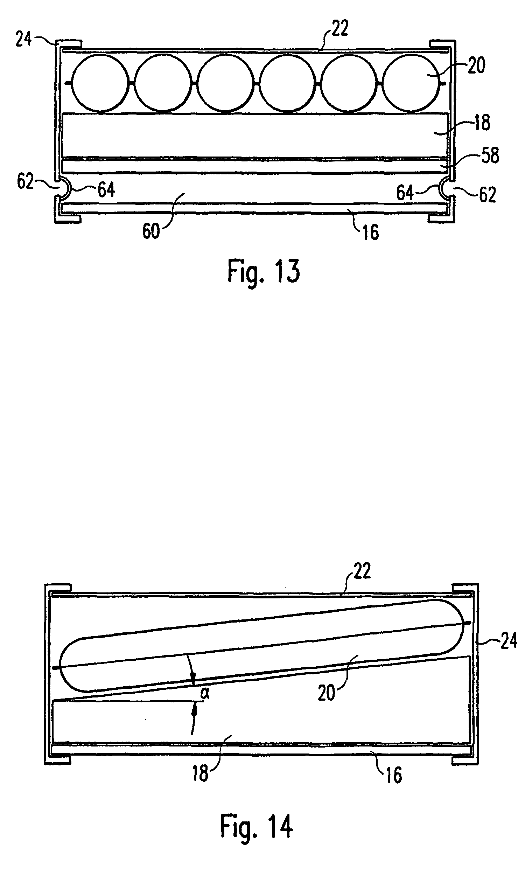

Fig. 13 zeigt eine fünfte Ausführungsform des erfindungsgemäßen Solarkollektors. Die fünfte Ausführungsform entspricht im wesentlichen der ersten Ausführungsform, wobei der Solarkollektor zusätzlich eine Zwischenplatte 58 und einen Luftkanal 60 aufweist. Der U-Profilrahmen 24 umschließt das Modul, welches schichtweise aus der Rückwand 16, der Zwischenplatte 58, der Wärmedämmplatte 16, dem Absorber 20 und der Glasplatte 22 besteht. Zwischen der Rückwand 16 und der Zwischenplatte 58 befindet sich ein Hohlraum. Auf der Höhe dieses Hohlraums befinden sich im U-Profilrahmen 24 an zwei gegenüberliegenden Seiten jeweils eine Öffnung 62. Durch den Hohlraum und die beiden Öffnungen 62 wird der Luftkanal 60 gebildet. Die beiden Öffnungen 62 weisen jeweils ein Ventil 64 auf.

Die Ventile 64 werden jeweils durch einen Thermostat gesteuert. Auf diese Weise kann bei Bedarf die Unterseite des Solarkollektors durch einen Luftaustausch gekühlt werden. Die unterhalb der Wärmedämmplatte 18 sich befindenden Teile des Solarkollektors sowie das Dach, auf dem der Solarkollektor montiert ist, heizen sich oftmals sehr stark auf. Diese Hitzeentwicklung ist meist unerwünscht und kann nicht genutzt werden. Der Luftkanal 60 wirkt dieser Hitzeentwicklung entgegen. Für den Luftkanal 60 sind lediglich eine Zwischenplatte 58, wenigstens zwei Öffnungen 62 und der Hohlraum erforderlich. Somit läßt sich diese Kühlvorrichtung mit einfachsten Mitteln erstellen. Auch das Ventil 64 mit Thermostat läßt sich auf einfache Weise ausbilden und ist somit kostengünstig.

In Fig. 14 ist eine sechste Ausführungsform des Solarkollektors dargestellt. Die sechste Ausführungsform unterscheidet sich von der ersten Ausführungsform dadurch, daß die Wärmedämmplatte 18 keilförmig ausgebildet ist und der Absorber 20 gegenüber dem U-Profilrahmen 24 um einen Winkel α geneigt ist. Im übrigen entspricht die sechste Ausführungsform der ersten Ausführungsform.

Im Hinblick auf den Sonneneinstahlungswinkel ist für den Absorber 20 ein vorbestimmter Anstellwinkel erwünscht, um den Wirkungsgrad des Solarkollektors zu optimieren. In den meisten Fällen weicht jedoch der gewünschte Anstellwinkel α des Absorbers 20 aus bautechnischen Gründen vom Neigungswinkel des Daches ab, auf dem der Solarkollektor installiert werden soll. Diese Abweichung kann mindestens teilweise mit dem Solarkollektor gemäß der sechsten Ausführungsform kompensiert werden. Die fünfte Ausführungsform mit dem Luftkanal 60 und die ;sechste Ausführungsform mit dem Anstellwinkel α des Absorbers 20 können auch miteinander kombiniert werden. Ebenfalls können der Luftkanal 60 und/oder der Anstellwinkel α auch mit den Solarkollektoren gemäß den Ausführungsformen 2 bis 4 gemeinsam ausgeführt werden.

## Patentansprüche

1. Verfahren zum Herstellen eines Solarkollektors, welches folgende Schritte umfaßt:
- Ausklinken eines U-Profils (10) an vorbestimmten Stellen (12) derart, daß das U-Profil (10) zu einem geschlossenen U-Profilrahmen (24) biegbar ist.;
- schichtweises Anordnen einer Rückwand (16), einer Wärmedämmplatte (18), eines Absorbers (20) und einer Glasplatte (22) zu einem Modul;
- Biegen des U-Profils (10) an zwei inneren Biegeachsen (13) um etwa 90° zu einem an der Umfangsseite offenen U-Profilrahmen (24);
- Einschieben des Moduls in den U-förmigen U-Profilrahmen (24), so daß der U-Profilrahmen (24) das Modul über drei Umfangsseiten umschließt;
- Biegen des U-Profils (10) an zwei äußeren Biegeachsen (14) um etwa 90°, so daß der U-Profilrahmen (24) das Modul an vier Umfangsseiten umschließt;
- Verbinden der Stirnseiten des U-Profils (10). miteinander, wobei wenigstens zwei Öffnungen (62) an gegenüberliegenden Seiten des U-Profils ausgebildet werden und die Wärmedämmplatte (18) von der Rückwand (16) zur Bildung eines Luftkanals (60) zwischen den Öffnungen (62) beabstandet ist.

2. Verfahren zum Herstellen eines Solarkollektors, welches folgende Schritte umfaßt:
- Ausklinken eines L-Profils (30) an vorbestimmten Stellen (31, 32) derart, daß das L-Profil (30) zu einem geschlossenen U-Profilrahmen (24) biegbar ist;
- Biegen des L-Profils (30) zu einem entlang den Umfangsseiten geschlossenen L-Profilrahmen;
- Verbinden der Stirnseiten des L-Profils (30) miteinander;
- schichtweises Anordnen einer Rückwand (16), einer Wärmedämmplatte (18), eines Absorbers (20) und einer Glasplatte (22) zu einem Modul;
- Einschieben des Moduls in den L-Profilrahmen, so daß die Bestandteile des Moduls parallel zur Rahmenebene liegen; und
- Biegen des L-Profilrahmens zu einem U-Profilrahmen (24), so daß das Modul formschlüssig in dem U-Profilrahmen (24) eingefaßt ist.

3. Verfahren nach Anspruch 1 oder 2,
**dadurch gekennzeichnet, daß**
das Verbinden der stirnseitigen Enden stoffschlüssig erfolgt.

4. Verfahren nach Anspruch 1 oder 2,
**dadurch gekennzeichnet, daß**
das Verbinden der stirnseitigen Enden durch Befestigen einer Verbindungsplatte im Bereich der beiden Enden erfolgt.

5. Verfahren nach Anspruch 4,
**dadurch gekennzeichnet, daß**
das Befestigen der Verbindungsplatte durch Annieten oder Verschrauben erfolgt.

6. Verfahren nach einem der Ansprüche 2 bis 5,
**dadurch gekennzeichnet, daß**
das Verfahren zusätzlich folgende Schritte umfaßt:
- Ausbilden von wenigstens zwei Öffnungen (62) im L-Profil (30), die an gegenüberliegenden Seiten des L-Profilrahmens (24) vorgesehen sind; und
- Beabstanden der Wärmedämmplatte (18) von der Rückwand (16), so daß ein Luftkanal (60) zwischen den wenigstens zwei Öffnungen (62) ausgebildet wird.

7. Verfahren nach Anspruch 1 oder 6,
**dadurch gekennzeichnet, daß**
das Beabstanden der Wärmedämmplatte (18) von der Rückwand (16) durch Anordnen von Abstandselementen zwischen Wärmedämmplatte (18) und Rückwand (16) erfolgt.

8. Verfahren nach Anspruch 1 oder 6,
**dadurch gekennzeichnet, daß**
das Beabstanden der Wärmedämmplatte (18) von der Rückwand (16) durch Anlegen einer Zwischenplatte (58) an die dem Absorber (20) abgewandte Seite der Wärmedämmplatte (18) erfolgt.

9. Verfahren nach Anspruch 1 oder 6,
**dadurch gekennzeichnet, daß**
das Beabstanden der Wärmedämmplatte (18) von der Rückwand (16) durch Anordnen einer vorgefertigten Formplatte durchgeführt wird, wobei die Formplatte wenigstens einen parallel zur Plattenebene sich erstreckenden Luftkanal (60) aufweist, der sich zwischen den Öffnungen (62) erstreckt.

10. Verfahren nach Anspruch 1 oder 6,
**gekennzeichnet durch** den Schritt:
- Bestücken wenigstens einer Öffnung (62) mit einem Ventil (64).

11. Verfahren nach Anspruch 10,
**dadurch gekennzeichnet, daß**
wenigstens den Ventilen (64) ein Thermostat zur Steuerung zugeordnet ist.

12. Verfahren nach Anspruch 1 oder 2,
**dadurch gekennzeichnet, daß**
das U-Profil (10) beziehungsweise das L-Profil (30) aus Aluminium besteht.

13. Verfahren nach einem der Ansprüche 1 bis 12,
**dadurch gekennzeichnet, daß**
der Absorber (20) mit einem vorbestimmten Neigungswinkel (α) gegenüber der Rahmenebene des U-Profilrahmens angeordnet wird.

## Claims

1. Method for producing a solar collector that comprises the following steps:
- notching a U-beam (10) at prespecified sites (12) so that the U-beam (10) can be bent to form a closed U-beam frame (24);
- layered assembling of a back wall (16), a heat-insulating plate (18), an absorber (20) and a glass plate (22) to form a module;
- bending of the U-beam (10) by about 90° at two inner bending axes (13) to form a U-beam frame (24) that is open at one peripheral side;
- inserting the module into the U-shaped U-beam frame (24), so that the U-beam frame (24) encloses the module on three peripheral sides;
- bending the U-beam (10) by about 90° at two outer bending axes (14), so that the U-beam frame (24) encloses the module on four peripheral sides;
- connecting the end surfaces of the U-beam (10) to one another, in such a way that at least two openings (62) are formed on opposite sides of the U-beam and the heat-insulating plate (18) is spaced apart from the back wall (16) to form an air channel (60) between the openings (62).

2. Method for producing a solar collector that comprises the following steps:
- notching an L-beam (30) at prespecified sites (31, 32) so that the L-beam (30) can be bent to form a closed U-beam frame (24) ;
- bending of the L-beam (30) to form an L-beam frame that is closed along the peripheral sides;
- connecting the end surfaces of the L-beam (30) to one another;
- layered assembling of a back wall (16), a heat-insulating plate (18), an absorber (20) and a glass plate (22) to form a module;
- inserting the module into the L-beam frame (24), so that the components of the module lie parallel to the plane of the frame; and
- bending the L-beam frame to form a U-beam frame (24) so that the module is form-fitted into the U-beam frame (24).

3. Method according to Claim 1 or 2,
**characterized in that** the end faces of the beams are connected in such a way that the beam material is fused together.

4. Method according to Claim 1 or 2,
**characterized in that** the end faces of the beams are connected by attaching a connecting plate in the region of the two ends.

5. Method according to Claim 4,
**characterized in that** the attachment of the connecting plate is brought about by means of rivets or screws.

6. Method according to one of the claims 2 to 5,
**characterized in that** the method comprises the following additional steps:
- provision of at least two openings (62) in the L-beam (30), which are disposed on opposite sides of the L-beam frame (24); and
- spacing the heat-insulating plate (18) apart from the back wall (16), so that an air channel (60) is formed between the at least two openings (62).

7. Method according to Claim 1 or 6,
**characterized in that** the separation between the heat-insulating plate (18) and the back wall (16) is produced by disposing spacer elements between the heat-insulating plate (18) and the back wall (16).

8. Method according to Claim 1 or 6,
**characterized in that** the separation between the heat-insulating plate (18) and the back wall (16) is produced by apposing a distance plate (58) to the surface of the heat-insulating plate (18) that faces away from the absorber (20).

9. Method according to Claim 1 or 6,
**characterized in that** the separation between the heat-insulating plate (18) and the back wall (16) is produced by providing a prefabricated moulded plate, such that the moulded plate comprises at least one air channel (60) that extends parallel to the plane of the plate, between the openings (62).

10. Method according to Claim 1 or 6,
**characterized by** the step:
- equipping at least one opening (62) with a valve (64).

11. Method according to Claim 10,
**characterized in that** with at least the valves (64) there is associated a thermostat for control.

12. Method according to Claim 1 or 2,
**characterized in that** the U-beam or the L-beam (30) is made of aluminium.

13. Method according to one of the claims 1 to 12,
**characterized in that** the absorber (20) is so disposed as to be tilted at a prespecified angle (α) with respect to the plane of the U-beam frame.

## Revendications

1. Procédé de fabrication d'un capteur solaire, comprenant les étapes qui consistent à :
- entailler un profilé en U (10) en des points (12) prédéterminés de telle sorte que le profilé en U (10) puisse être plié pour former un châssis de profilés en U (24) fermé ;
- disposer, par couches, une paroi arrière (16), un panneau calorifuge (18), un absorbeur (20) et une plaque de verre (22) pour former un module ;
- plier le profilé en U (10) d'approximativement 90°, suivant deux axes de pliage intérieurs (13), pour former un châssis de profilés en U (24) ouvert du côté de la circonférence ;
- enfiler le module dans le châssis de profilés en U (24) en forme de U, de telle sorte que le châssis de profilés en U (24) entoure le module sur trois côtés de la circonférence ;
- plier le profilé en U (10) d'approximativement 90°, suivant deux axes de pliage extérieurs (14), de telle sorte que le châssis de profilés en U (24) entoure le module sur quatre côtés de la circonférence ;
- relier entre elles les faces frontales du profilé en U (10), au moins deux ouvertures (62) étant formées au niveau des faces opposées du profilé en U et le panneau calorifuge (18) se trouvant à distance de la paroi arrière (16) afin de former un canal d'air (60) entre les ouvertures (62).

2. Procédé de fabrication d'un capteur solaire, comprenant les étapes qui consistent à :
- entailler un profilé en L (30) en des points (31, 32) prédéterminés de telle sorte que le profilé en L (30) puisse être plié pour former un châssis de profilés en U (24) fermé ;
- plier le profilé en L (30) pour former un châssis de profilés en L fermé le long des côtés de la circonférence ;
- relier entre elles les faces frontales du profilé en L (30) ;
- disposer, par couches, une paroi arrière (16), un panneau calorifuge (18), un absorbeur (20) et une plaque de verre (22) pour former un module ;
- enfiler le module dans le châssis de profilés en L, de telle sorte que les éléments du module soient parallèles au plan du châssis ; et
- plier le châssis de profilés en L pour former un châssis de profilés en U (24), afin que le module soit intégré, par complémentarité de formes, dans le châssis de profilés en U (24).

3. Procédé selon la revendication 1 ou 2, **caractérisé en ce que** la liaison entre les extrémités frontales s'effectue avec une continuité de la matière.

4. Procédé selon la revendication 1 ou 2, **caractérisé en ce que** la liaison entre les extrémités frontales s'effectue par fixation d'une plaque de liaison dans la zone des deux extrémités.

5. Procédé selon la revendication 4, **caractérisé en ce que** la fixation de la plaque de liaison s'effectue par rivure ou vissage.

6. Procédé selon l'une des revendications 2 à 5, **caractérisé en ce que** le procédé comprend les étapes supplémentaires qui consistent à :
- ménager au moins deux ouvertures (62) dans le profilé en L (30), prévues sur les côtés opposés du châssis de profilés en U (24) ; et
- disposer le panneau calorifuge (18) à distance de la paroi arrière (16) pour former un canal d'air (60) entre les ouvertures (62), au nombre minimum de deux.

7. Procédé selon la revendication 1 ou 6, **caractérisé en ce que** le panneau calorifuge (18) est disposé à distance de la paroi arrière (16) en plaçant des éléments d'écartement entre le panneau calorifuge (18) et la paroi arrière (16).

8. Procédé selon la revendication 1 ou 6, **caractérisé en ce que** le panneau calorifuge (18) est disposé à distance de la paroi arrière (16) grâce au fait qu'est placé un panneau intermédiaire (58) du côté du panneau calorifuge (18) qui est opposé à l'absorbeur (20).

9. Procédé selon la revendication 1 ou 6, **caractérisé en ce que** le panneau calorifuge (18) est disposé à distance de la paroi arrière (16) grâce au fait qu'est placé un panneau façonné préfabriqué, le panneau façonné présentant au moins un canal d'air (60) s'étendant parallèlement au plan du panneau, canal qui s'étend entre les ouvertures (62).

10. Procédé selon la revendication 1 ou 6, **caractérisé par** l'étape qui consiste à :
- équiper au moins une ouverture (62) d'une soupape (64).

11. Procédé selon la revendication 10, **caractérisé en ce qu'**un thermostat est associé à au moins les soupapes (64) pour les commander.

12. Procédé selon la revendication 1 ou 2, **caractérisé en ce que** le profilé en U (10) et/ou le profilé en L (30) est/sont constitué(s) en aluminium.

13. Procédé selon l'une des revendications 1 à 12, **caractérisé en ce que** l'absorbeur (20) est disposé avec un angle d'inclinaison prédéterminé (α) par rapport au plan du châssis de profilés en U.
